# EUROPEAN PATENT APPLICATION

(11) **EP 2 014 719 A1**
(43) Date of publication of application: **14.01.2009**
(21) Application number: 07741660.0
(22) Date of filing: 10.04.2007
(51) Int. Cl.: C08L 51/06, C08J 3/05, C08L 23/20

(54) **AQUEOUS EMULSION OF OLEFIN COPOLYMER OR MODIFIED PRODUCT OF THE OLEFIN COPOLYMER**

(30) Priority: 21.04.2006 JP 2006117670; 10.08.2006 JP 2006217976
(71) Applicant: Sumitomo Chemical Company, Limited, Tokyo 104-8260 (JP); Sumika Chemtex Company, Limited, Osaka-shi, Osaka 554-8558 (JP)
(72) Inventor: OKUBO, Yoshihito, Toyonaka-shi, Osaka 561-0802 (JP); KUSUNOKI, Kazutaka, Kobe-shi, Hyogo 658-0032 (JP); MITSUTAKE, Tatsuo, Toyonaka-shi, Osaka 560-0021 (JP); NARAHARA, Hideo, Toyonaka-shi, Osaka 560-0021 (JP); HIKASA, Tadashi, Sodegaura-shi, Chiba 229-0246 (JP)
(74) Representative: Duckworth, Timothy John
(86) International application number: PCT/JP2007/058224
(87) International publication number: WO 2007/123071

(57) **Abstract**

An emulsion comprising a dispersoid dispersed in water together with an emulsifier, wherein
the dispersoid is an olefin copolymer containing a structural unit derived from ethylene, linear α-olefin, or ethylene and linear α-olefin, and a structural unit derived from the following vinyl compound (I), or an olefin copolymer modified material obtained by further graft-polymerizing unsaturated carboxylic acids to the olefin copolymer,
and the volume-based median diameter of the dispersoid contained in the emulsion is 0.01 to 1 µm.

CH₂=CH-R (I)

(wherein, R in the vinyl compound (I) represents a secondary alkyl group, tertiary alkyl group or alicyclic hydrocarbon group.).

## Description

### Technical Field

The present invention relates to an aqueous emulsion containing an olefin copolymer or its modified material.

### Background Art

Known as olefin copolymer modified materials are olefin copolymer modified materials obtained by graft-polymerizing alkenyl aromatic hydrocarbon and/or unsaturated carboxylic acids to an olefin copolymer containing a structural unit derived from an α-olefin and/or ethylene and a structural unit derived from a vinyl compound such as vinylcyclohexane and the like, and these modified materials are disclosed to be excellent in adhesion to polypropylene showing poor adhesiveness (patent document 1).

It is disclosed in patent document 2 that an aqueous emulsion containing as a dispersoid a copolymer of ethylene, vinylcyclohexane and unsaturated carboxylic acids which is a kind of the modified materials, and having a medium particle size (median diameter) of 1.7 to 3.3 µm is excellent in moldability, heat resistance, solvent resistance, mechanical property and adhesion.
(patent document 1) Japanese Patent Application Laid-Open (JP-A) No. 2003-160621 ([0060] to [0062])
(patent document 2) JP-A No. 2005-320400 ([0007], [0064] to [0072])

### Disclosure of the Invention

An aqueous emulsion containing an olefin copolymer and modified material thereof shows high safety to environments and expected to be applied to adhesives, paints, painting primers, printing binders and the like in various fields such as automobiles, household electric appliances and the like, however, this aqueous emulsion manifests insufficient adhesion to poorly-adhesive polyolefins such as polypropylene and the like, and it is required further improvement in adhesion for applying the aqueous emulsion to these fields.

The present invention has an object of providing an olefin copolymer-containing aqueous emulsion or an olefin copolymer modified material-containing aqueous emulsion, showing further excellent adhesion.

The present inventors have found that an aqueous emulsion containing as a dispersoid an olefin copolymer or olefin copolymer modified material having a median diameter in a certain range is excellent in adhesion to polyolefins.

That is, the present invention provides the following [1] to [13].
[1] An emulsion comprising a dispersoid dispersed in water together with an emulsifier, wherein
   the dispersoid is an olefin copolymer containing a structural unit derived from ethylene, linear α-olefin, or ethylene and linear α-olefin, and a structural unit derived from the following vinyl compound (I), or an olefin copolymer modified material obtained by further graft-polymerizing unsaturated carboxylic acids to the olefin copolymer,
   and the volume-based median diameter of the dispersoid contained in the emulsion is 0.01 to 1 µm:

   CH₂=CH-R (I)

   (wherein, R in the vinyl compound (I) represents a secondary alkyl group, tertiary alkyl group or alicyclic hydrocarbon group.).
[2] The emulsion according to [1], wherein the emulsifier is at least one emulsifier selected from the group consisting of polyoxyethylene polyoxypropylene block copolymers and polyoxyethylene alkyl ethers.
[3] The emulsion according to [1], wherein the emulsifier is a water-soluble acrylic resin containing a structural unit derived from an α,β-unsaturated carboxylic acid, vinyl acrylate and (meth)acrylate.
[4] The emulsion according to any one of [1] to [3],
   wherein the vinyl compound (I) is vinylcyclohexane.
[5] The emulsion according to any one of [1] to [4],
   wherein the volume-based median diameter of the dispersoid is 0.2 to 0.6 µm.
[6] A method of producing an emulsion wherein an emulsifier and an olefin copolymer containing at least one selected from the group consisting of ethylene and linear α-olefins and a structural unit derived from said vinyl compound (I), or an emulsifier and an olefin copolymer modified material obtained by graft-polymerizing unsaturated carboxylic acids to the olefin copolymer, are kneaded while applying shear stress, before dispersing into water.
[7] The production method according to [6], wherein an emulsifier and an olefin copolymer modified material are kneaded while applying shear stress at a shear rate of 450 sec⁻¹ to 30000 sec⁻¹.
[8] The production method according to [6] or [7], wherein kneading is performed while applying shear stress by a twin-screw extruder.
[9] A laminate comprising an adhesion body composed of at least one material selected from the group consisting of woody materials, cellulose materials, plastic materials, ceramic materials and metal materials, and an adhering layer derived from the emulsion as described in any one of [1] to [5].
[10] The laminate according to [9], wherein the adhesion body is a polyolefin.
[11] The laminate according to [9] or [10], wherein the adhesion body is polypropylene.
[12] A three-layered laminate having an adhesion body composed of at least one material selected from the group consisting of woody materials, cellulose materials, plastic materials other than polyolefins, ceramic materials and metal materials, an adhering layer obtained from the emulsion as described in any one of [1] to [5], and an adhesion body composed of a polyolefin, in this order.
[13] A method of producing a laminate comprising coating the emulsion as described in any one of [1] to [5] on an adhesion body composed of at least one material selected from the group consisting of woody materials, cellulose materials, plastic materials other than polyolefins, ceramic materials and metal materials, and drying the emulsion.

### Modes for Carrying Out the Invention

The olefin copolymer to be used in the present invention is an olefin copolymer containing a structural unit derived from ethylene, linear α-olefin, or ethylene and linear α-olefin, and a structural unit derived from the following vinyl compound (I):

CH₂=CH-R (I)

(wherein, R in the vinyl compound (I) represents a secondary alkyl group, tertiary alkyl group or alicyclic hydrocarbon group.).

The olefin copolymer modified material to be used in the present invention (hereinafter, referred to as modified material in some cases) is obtained by further graft-polymerizing unsaturated carboxylic acids to the olefin copolymer.

Namely, as the structural unit to be contained in the modified material, at least a structural unit derived from ethylene, linear α-olefin, or ethylene and linear α-olefin, a structural unit derived from the vinyl compound (I), and a structural unit derived from unsaturated carboxylic acids are contained.

Here, R represents a secondary alkyl group, tertiary alkyl group or alicyclic hydrocarbon group.

As the secondary alkyl group, secondary alkyl groups having 3 to 20 carbon atoms are preferable, as the tertiary alkyl group, tertiary alkyl groups having 4 to 20 carbon atoms are preferable, and as the alicyclic hydrocarbon group, alicyclic hydrocarbon groups having a 3 to 16-membered ring are more preferable. As the substituent R, alicyclic hydrocarbon groups having a 3 to 10-membered ring and having 3 to 20 carbon atoms, and tertiary alkyl groups having 4 to 20 carbon atoms are preferable.

The vinyl compound (I) in which the substituent R represents a secondary alkyl group includes 3-methyl-1-butene, 3-methyl-1-pentene, 3-methyl-1-hexene, 3-methyl-1-heptene, 3-methyl-1-octene, 3,4-dimethyl-1-petene, 3,4-dimethyl-1-hexene, 3,4-dimethyl-1-heptene, 3,4-dimethyl-1-octene, 3,5-dimethyl-1-hexene, 3,5-dimethyl-1-heptene, 3,5-dimethyl-1-octene, 3,6-dimethyl-1-heptene, 3,6-dimethyl-1-octene, 3,7-dimethyl-1-octene, 3,4,4-trimethyl-1-pentene, 3,4,4-trimethyl-1-hexene, 3,4,4-trimethyl-1-heptene, 3,4,4-trimethyl-1-octene, and the like.

The vinyl compound (I) in which the substituent R represents a tertiary alkyl group includes 3,3-dimethyl-1-butene, 3,3-dimethyl-1-pentene, 3,3-dimethyl-1-hexene, 3,3-dimethyl-1-heptene, 3,3-dimethyl-1-octene, 3,3,4-trimethyl-1-pentene, 3,3,4-trimethyl-1-hexene, 3,3,4-trimethyl-1-heptene, 3,3,4-trimethyl-1-octene and the like.

The vinyl compound (I) in which the substituent R represents an alicyclic hydrocarbon group includes vinyl compounds in which the substituent R represents a cycloalkyl group such as vinylcyclopropane, vinylcyclobutane, vinylcyclopentane, vinylcyclohexane, vinylcycloheptane, vinylcyclooctane and the like; vinyl compounds in which the substituent R represents a cycloalkenyl group such as 5-vinyl-2-norbornene, 4-vinyl-1-cyclohexene and the like; 1-vinyladamantane, and the like.

The preferable vinyl compounds (I) include 3-methyl-1-butene, 3-methyl-1-pentene, 3-methyl-1-hexene, 3,4-dimethyl-1-pentene, 3,5-dimethyl-1-hexene, 3,4,4-trimethyl-1-pentene, 3,3-dimethyl-1-butene, 3,3-dimethyl-1-pentene, 3,3,4-trimethyl-1-pentene, vinylcyclopentane, vinylcyclohexane, vinylcycloheptane, vinylcyclooctane and 5-vinyl-2-norbornene. The more preferable vinyl compounds (I) include 3-methyl-1-butene, 3-methyl-1-pentene, 3,4-dimethyl-1-pentene, 3,3-dimethyl-1-butene, 3,3,4-trimethyl-1-pentane, vinylcyclohexane and vinylnorbornene. The further preferable vinyl compounds (I) include 3,3-dimethyl-1-butene and vinylcyclohexane. The most preferable vinyl compound (I) is vinylcyclohexane.

In the olefin copolymer to be used in the present invention, the content of a monomer unit of the vinyl compound (I) is usually 5 to 40 mol%, preferably 10 to 30 mol%, more preferably 10 to 20 mol% with respect to 100 mol% of all monomer units constituting the olefin copolymer.

When the content of a monomer unit of the vinyl compound (I) is 40 mol% or less, there is a preferable tendency of improvement in adhesion of the resultant adhesive.

The content of a monomer unit of the vinyl compound (I) can be measured by using ¹H-NMR spectrum or ¹³C-NMR spectrum.

The linear α-olefin to be used in the present invention is usually a linear α-olefin having 3 to 20 carbon atoms, and specific examples thereof include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicocene and the like. Of them, preferable are propylene, 1-butene, 1-pentene, 1-hexene and 1-octene, and particularly preferable is propylene.

In the olefin copolymer to be used in the present invention, the total content of a structural unit derived from ethylene and a structural unit derived from a linear α-olefin is usually 95 to 60 mol%, preferably 90 to 70 mol%, more preferably 90 to 80 mol% with respect to 100 mol% of all monomer units constituting the olefin copolymer.

As the structural unit derived from ethylene, linear α-olefin, or ethylene and linear α-olefin, a structural unit derived from ethylene is suitable.

The olefin copolymer to be used in the present invention is obtained by copolymerizing a structural unit derived from ethylene, linear α-olefin, or ethylene and linear α-olefin, with a vinyl compound (I), and may also be one obtained by further copolymerizing an addition-polymerizable monomer.

Here, the addition-polymerizable monomer is a monomer other than ethylene, linear α-olefin and vinyl compound (I) and capable of addition-polymerizing with ethylene, linear α-olefin and vinyl compound (I), and the carbon number of this monomer is usually about 3 to 20.

Specific examples of the addition-polymerizable monomer include cycloolefins, vinylidene compounds of the following general formula (II): 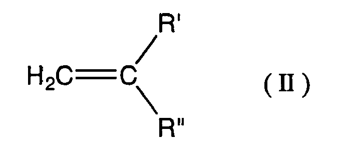 (wherein, R' and R" represent each independently a linear, branched or cyclic alkyl group having about 1 to 18 carbon atoms, or a halogen atom and the like.), diene compounds, vinyl halides, vinyl alkylates, vinyl ethers, acrylonitriles and the like.

Examples of the cycloolefin include cyclobutene, cyclopentene, cyclohexene, cyclooctene, 3-methylcyclopentene, 4-methylcyclopetene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclodocecene, 8-ethyl-2-tetracyclodocecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano-2-norbornene, 8-methoxycarbonyl-2-tetracyclododecene, 8-methyl-8-methoxycarbonyl-2-tetracyclododecene, 8-cyano-2-tetracyclododecene and the like. More preferably, the cycloolefin includes cyclopentene, cyclohexene, cyclooctene, 2-norbornene, 5-methyl-2-norbornene, 5-phenyl-2-norbornene, 2-tetracyclododecene, 2-tricyclodecene, 2-tricycloundecene, 2-pentacyclopentadecene, 2-pentacyclohexadecene, 5-acetyl-2-norbornene, 5-acetyloxy-2-norbornene, 5-methoxycarbonyl-2-norbornene, 5-methyl-5-methoxycarbonyl-2-norbornene and 5-cycno-2-norbornene, and particularly preferable are 2-norbornene and 2-tetracyclododecene.

Examples of the vinylidene compound include isobutene, 2-methyl-1-butene, 2-methyl-1-pentene, 2-methyl-1-hexene, 2-methyl-1-heptene, 2-methyl-1-octene, 2,3-dimethyl-1-butene, 2,3-dimethyl-1-pentene, 2,3-dimethyl-1-hexene, 2,3-dimethyl-1-heptene, 2,3-dimethyl-1-octene, 2,4-dimethyl-1-pentene, 2,4,4-trimethyl-1-pentene, vinylidene chloride, and the like. The particularly preferable vinylidene compound includes isobutene, 2,3-dimethyl-1-butene and 2,4,4-trimethyl-1-pentene.

Examples of the diene compound include 1,3-butadiene, 1,4-pentadiene, 1,5-hexadiene, 1,6-heptadiene, 1,7-octadiene, 1,5-cyclooctadiene, 2,5-norbornadiene, dicyclopentadiene, 5-vinyl-2-norbornene, 5-allyl-2-norbornene, 4-vinyl-1-cyclohexene, 5-ethylidene-2-norbornene, and the like. The particularly preferable diene compound includes 1,4-pentadiene, 1,5-hexadiene, 2,5-norbornadiene, dicyclopentadiene, 5-vinyl-2-norbornene, 4-vinyl-1-cyclohexene and 5-ethylidene-2-norbornene.

Examples of the vinyl alkylate include vinyl acetate, vinyl propionate, vinyl butyrate, and the like, and examples of the vinyl ethers include methyl vinyl ether, ethyl vinyl ether, n-butyl vinyl ether and the like.

Examples of the vinyl halide include vinyl chloride and the like, and examples of the acrylonitriles include acrylonitrile, methacrylonitrile and the like.

The content of the addition-polymerizable monomer unit in the olefin copolymer is usually in a range in which the adhesiveness of the resulting olefin copolymer modified material is not deteriorated, and the specific content is usually about 5 mol% or less, preferably 1 mol% or less with respect to 100 mol% of all monomer units constituting the olefin copolymer, and it is more preferable that the addition-polymerizable monomer unit is not substantially contained.

The method of producing the olefin copolymer to be used in the present invention includes, for example, production methods in the presence of a catalyst containing a transition metal compound having a group having an indenyl type anion skeleton, or a cross-linked cyclopentadiene type anion skeleton. Of them, production methods according to methods described in JP-A Nos. 2003-82028, 2003-160621 and 2000-128932 are suitable.

In the olefin copolymer production, an ethylene homopolymer, vinylcyclohexane homopolymers and the like are by-produced in some cases in addition to the copolymer to be used in the present invention, depending on the kind of a catalyst used and the polymerization conditions. In such cases, the copolymer to be used in the present invention can be batched off easily by performing solvent extraction using Soxhlet extractor and the like. For example, a vinylcyclohexane homopolymer can be removed as an insoluble component in extraction using toluene, and a polyolefin such as polyethylene and the like can be removed as an insoluble component in extraction using chloroform, and the copolymer to be used in the present invention can be batched off as a component soluble in both the solvents. Of course, the olefin copolymer may also be used while maintaining the presence of such by-products unless there is a problem, depending on the use.

The molecular weight distribution (Mw/Mn = [weight-average molecular weight]/[number-average molecular weight]) of the olefin copolymer to be used in the present invention is usually about 1.5 to 10.0, preferably about 1.5 to 7.0, more preferably about 1.5 to 5.0. When the molecular weight distribution of the olefin copolymer is 1.5 or more and 10.0 or less, there is a preferable tendency of improvement in the mechanical strength and transparency of the resultant olefin copolymer modified material.

From the standpoint of mechanical strength, the weight-average molecular weight (Mw) of the olefin copolymer is usually about 5000 to 1000000, preferably about 10000 to 500000, more preferably 15000 to 400000. When the weight-average molecular weight of the olefin copolymer is 5000 or more, there is a preferable tendency of improvement in the mechanical strength of the resulting olefin copolymer modified material, and when 1000000 or less, there is preferable tendency of improvement in the flowability of the olefin copolymer.

The olefin copolymer to be used in the present invention has a limiting viscosity [η] of usually about 0.25 to 10 dl/g, preferably about 0.3 to 3 dl/g from the standpoint of mechanical strength.

The present invention is an aqueous emulsion in which the dispersoid is the above-described olefin copolymer and the above-described olefin copolymer is dispersed together with an emulsifier, or an aqueous emulsion in which the dispersoid is an olefin copolymer modified material (hereinafter, referred to simply as modified material in some cases) obtained by graft-polymerizing unsaturated carboxylic acids to the above-described olefin copolymer and the modified material is dispersed together with an emulsifier. Particularly, the dispersoid is preferably a modified material because of excellent adhesion.

The amount of graft polymerization of unsaturated carboxylic acids with respect to the modified material is usually about 0.01 to 20 wt%, preferably about 0.05 to 10 wt%, more preferably about 0.1 to 5 wt% with respect to 100 wt% of the resultant modified material.

When the proportion of the amount of graft polymerization of unsaturated carboxylic acids is 0.01 wt% or less, there is a preferable tendency of improvement in the adhesive force of the modified material, and when 20 wt% or less, there is a preferable tendency of improvement in the thermal stability of the modified material.

Examples of the unsaturated carboxylic acids include unsaturated carboxylic acids such as acrylic acid, methacrylic acid, crotonic acid, isocrotonic acid, maleic acid, fumaric acid, itaconic acid, citraconic acid, nadic acid, methylnadic acid, highmic acid, angelic acid, tetrahydrophthalic acid, sorbic acid, mesaconic acid and the like; unsaturated carboxylic anhydrides such as maleic anhydride, itaconic anhydride, citraconic anhydride, nadic anhydride, methylnadic anhydride, highmic anhydride and the like; unsaturated carboxylates such as methyl acrylate, methyl methacrylate, ethyl acrylate, ethyl methacrylate, n-butyl acrylate, n-butyl methacrylate, i-butyl acrylate, i-butyl methacrylate, glycidyl acrylate, glycidyl methacrylate, monoethyl maleate, diethyl maleate, monomethyl fumarate, dimethyl fumarate, monomethyl itaconate, dimethyl itaconate and the like; unsaturated carboxylic amides such as acrylamide, methacrylamide, maleic monoamide, maleic diamide, maleic N-monoethylamide, maleic N,N-diethylamide, maleic N-monobutylamide, maleic N,N-dibutylamide, fumaric monoamide, fumaric diamide, fumaric N-monoethylamide, fumaric N,N-diethylamide, fumaric N-monobutylamide, fumaric N,N-dibutylamide and the like; unsaturated carboxylic imides such as maleimide, N-butylmaleimide, N-phenylmaleimide and the like; unsaturated carboxylic halides such as maleoyl chloride and the like; unsaturated carboxylic acid metal salts such as sodium acrylate, sodium methacrylate, potassium acrylate, potassium methacrylate and the like. The above-described unsaturated carboxylic acids may be used in combination.

As the unsaturated carboxylic acids, maleic anhydride is particularly preferable.

Examples of the modified material production method include a method in which an olefin copolymer is melted, then, unsaturated carboxylic acids are added an allowed to graft-polymerize to the copolymer, a method in which an olefin copolymer is melted in a solvent such as toluene, xylene, and the like, then, unsaturated carboxylic acids are added an allowed to graft-polymerize to the copolymer, and other methods.

The method in which an olefin copolymer is melted, then, unsaturated carboxylic acids are added an allowed to graft-polymerize to the copolymer is preferable since known various methods for mixing resins or a resin and a solid or liquid additive can be adopted by melt kneading using an extruder. As further preferable examples, mentioned are methods in which all of components or a combination of some components are mixed separately by a Henshcel mixer, ribbon blender, blender and the like to give a uniform mixture, then, the mixture is melt kneaded, and the like. As the melt kneading means, conventionally known kneading means such as a Banbury mixer, plasto mill, blabender plasto graph, single screw or twin screw extruder and the like can be widely adopted. Particularly preferably, a method is recommended in which a single screw or twin screw extruder is used, and an olefin copolymer, unsaturated carboxylic acids and radical initiator previously mixed sufficiently is fed to a feeding port of the extruder and kneading is performed, since continuous production is possible and productivity is improved. The temperature of a part for performing melt kneading of the extruder (for example, the cylinder temperature in the case of an extruder) is usually 50 to 300°C, preferably 80 to 270°C. When the temperature is 50°C or higher, there is a preferable tendency of improvement in the grafting amount, and when the temperature is 300°C or lower, there is a preferable tendency of suppression of decomposition of the olefin copolymer. Regarding the temperature of a part for performing melt kneading of an extruder, it is preferable that melt kneading is divided into an anterior half stage and a posterior half state, and the temperature of the anterior half is set higher than the posterior half. The melt kneading time is usually 0.1 to 30 minutes, particularly preferably 0.1 to 5 minutes. When the melt kneading time is 0. 1 minute or longer, there is a preferable tendency of improvement in the grafting amount, and when the melt kneading time is 30 minutes or shorter, there is a preferable tendency of suppression of an olefin copolymer.

For graft-polymerizing unsaturated carboxylic acids to an olefin polymer, polymerization is carried out usually in the presence of a radical initiator.

The addition amount of a radical initiator is usually 0.01 to 10 parts by weight, preferably 0.01 to 1 part by weight with respect to 100 parts by weight of an olefin polymer. When the addition amount is 0.01 part by weight or more, there is a preferable tendency of increase in the grafting amount to an olefin polymer to improve adhesion strength, and when the addition amount is 10 parts by weight or less, there is a preferable tendency of decrease in an unreacted radical initiator in the resultant modified material to improve adhesion strength.

The radical initiator is an organic peroxide, and preferably an organic peroxide of which decomposition temperature at which the half period is one minute is 50 to 210°C. When the decomposition temperature is 50°C or higher, there is a preferable tendency of improvement in the grafting amount, and when the decomposition temperature is 210°C or lower, there is a preferable tendency of decrease in decomposition of an olefin polymer. These organic peroxides are preferable since after decomposition to general a radical, an action of extracting a proton from a polypropylene resin is performed.

The organic peroxide of which decomposition temperature at which the half period is one minute is 50 to 210°C includes diacyl peroxide compounds, dialkyl peroxide compounds, peroxy ketal compounds, alkyl perester compounds, percarbonate compounds and the like. Specifically mentioned are dicetyl peroxy dicarbonate, di-3-methoxybutyl peroxy dicarbonate, di-2-ethylhexyl peroxy dicarbonate, bis(4-t-butylcyclohexyl) peroxy dicarbonate, diisopropyl peroxy dicarbonate, t-butyl peroxy isopropyl carbonate, dimyristyl peroxy carbonate, 1,1,3,3-tetramethyl butyl neodecanoate, α-cumyl peroxy neodecanoate, t-butyl peroxy neodecanoate, 1,1-bis(t-butyl peroxy)cyclohexane, 2,2-bis(4,4-di-t-butyl peroxy cyclohexyl)propane, 1,1-bis(t-butyl peroxy)cyclododecane, t-hexyl peroxy isopropyl monocarbonate, t-butyl peroxy-3,5,5-trimethyl hexanoate, t-butyl peroxy laurate, 2,5-dimethyl-2,5-di(benzoyl peroxy)hexane, t-butyl peroxy acetate, 2,2-bis(t-butyl peroxy)butane, t-butyl peroxy benzoate, n-butyl-4,4-bis(t-peroxy)valerate, di-t-butyl peroxy isophpthalate, dicumyl peroxide, α,α'-bis(t-butyl peroxy-m-isopropyl)benzene, 2,5-dimethyl-2,5-di(t-butyl peroxy)hexane, 1,3-bis(t-butyl peroxy isopropyl)benzene, t-butyl cumyl peroxide, di-t-butyl peroxide, p-menthane hydroperoxide, 2,5-dimethyl-2,5-di(t-butyl peroxy)hexyne-3, and the like.

When the decomposition temperature is lower than 50°C, there is a tendency of no improvement in the grafting amount, and when the decomposition temperature is higher than 210°C, there is a tendency of no improvement in the grafting amount. Preferable among these organic peroxides are dialkyl peroxide compounds, diacyl peroxide compounds, percarbonate compounds and alkyl perester compounds.

The molecular weight distribution (Mw/Mn) of the modified material to be used in the present invention is usually 1.5 to 10, preferably 1.5 to 7, more preferably 1.5 to 5. When the molecular weight distribution is 10 or less, there is a preferable tendency of improvement in the adhesion of the modified material.

The molecular weight distribution of the modified material can be measured by the same manner as for the molecular weight distribution of the above-described olefin copolymer.

The modified material to be used in the present invention has a limiting viscosity [η] of usually about 0.25 to 10 dl/g, preferably about 0.3 to 3 dl/g from the standpoint of mechanical strength.

The emulsion of the present invention is an emulsion containing thus obtained olefin copolymer or its modified material dispersed as a dispersoid in water together with an emulsifier, and the volume-based median diameter of the dispersoid is 0.01 to 1 µm.

Here, preferable as the emulsifier are polyoxyethylene polyoxypropylene block copolymers, polyoxyethylene polyoxypropyl alkyl ethers, and mixtures thereof because of a tendency of excellent stability of the emulsion.

As the emulsifier, water-soluble acrylic resins are preferably used.

The water-soluble acrylic resin is an aqueous solution containing a resin containing a structural unit derived from an α,β-unsaturated carboxylic acid, and in the aqueous solution, the resin is usually uniformly dissolved. Examples of the monomer constituting the resin include α,β-unsaturated carboxylic acids having 3 to 8 carbon atoms such as acrylic acid, methacrylic acid, maleic acid, maleic anhydride, succinic acid, itaconic acid and the like; (meth)acrylates having 4 to 18 carbon atoms such as methyl (meth)acrylate, butyl (meth)acrylate, 2-ethylhexyl (meth)acrylate and the like; vinyl acrylates such as ethylene acrylate, ethylene methacrylate and the like; vinyl halides such as vinyl chloride, vinyl bromide and the like; vinylidene halides such as vinylidene chloride and the like; vinyl compounds such as vinylphosphonic acid, vinylsulfonic acid, salts thereof and the like; aromatic vinyls such as styrene, α-methylstyrene, chlorostyrene and the like; nitriles such as (meth)acrylonitrile and the like; acrylamides such as N-methylolacrylamide, N-butoxymethylacrylamide and the like; conjugated dienes such as butadiene, isoprene and the like; allyl compounds such as allyl sulfonate, diallyl phthalate, triallyl cyanurate, triallyl isocyanurate and the like.

The water-soluble acrylic resin preferably contains structural units derived from each of an α,β-unsaturated carboxylic acid, vinyl acrylate and (meth)acrylate, and it is particularly preferable that a structural unit derived from an α,β-unsaturated carboxylic acid is contained in an amount of 10 to 90 mol%, a structural unit derived from a vinyl acrylate is contained in an amount of 5 to 60 mol%, and a structural unit derived from a (meth)acrylate is contained in an amount of 5 to 85 mol% with respect to 100 mol% of structural units derived from monomers constituting the resin.

The water-soluble acrylic resin, polyoxyethylene polyoxypropylene block copolymer and polyoxyethylene polyalkyl ether may be used in combination.

Examples of the method of producing the emulsion of the present invention include a method in which an olefin copolymer or olefin copolymer modified material and an emulsifier are kneaded while applying shear stress, then, dispersed in water; a method in which an olefin copolymer or olefin copolymer modified material is dissolved in an organic solvent such as toluene and the like, then, mixed with an emulsifier while applying shear stress, then, dispersed in water, then, an organic solvent is removed; and other methods.

The shear rate in applying shear stress is usually about 450 sec⁻¹ to 30000 sec⁻¹, preferably about 1000 sec⁻¹ to 10000 sec⁻¹. When the shear rate is 450 sec⁻¹ or more, there is a preferable tendency of improvement in the adhesion of the resultant emulsion, and when 30000 sec⁻¹ or less, there is a preferable tendency of easier industrial production.

Here, the shear rate is a numerical value obtained by dividing the peripheral velocity [mm/sec] of the outermost peripheral part of an screw element by a clearance [mm] between a screw and a barrel.

As the apparatus for applying shear stress, for example, twin screw extruders, multi screw extrudes such as laboplasto mill (manufactured by Toyo Seiki Seisaku-sho, Ltd.), laboplasto mill micro (manufactured by Toyo Seiki Seisaku-sho, Ltd.) and the like, appliances having a barrel such as a homogenizer, T,K Filmix (manufactured by PRIMIX Corporation) and the like, are mentioned.

As specific emulsion production methods using a multi screw extruder as an example, exemplified are methods in which an olefin copolymer modified material is fed from a hopper of a multi screw extruder having two or more screws in a casing, and heated and melt kneaded, further, kneaded with an emulsifier fed from at least one liquid feeding port provided in a compression zone or/and measuring zone of the extruder, then, dispersed in water, and other methods.

As the method of producing an emulsion by an appliance having no barrel (cylinder), mentioned are mechanical emulsification methods using, for example, a stirring vessel, chemical stirrer, vortex mixer, flow jet mixer, colloid mill, ultrasonic generator, high pressure homogenizer, Bunsankun (manufactured by Fujikin K.K.), static mixer, micro mixer and the like; and other methods.

Though emulsion production methods by chemical emulsification methods such as self emulsification and the like are also mentioned in addition to the mechanical emulsification methods as described above, preferable are mechanical emulsification methods.

As the emulsion production method of the present invention, preferable is a method in which an olefin copolymer modified material and an emulsifier are kneaded while applying shear stress, then, dispersed in water since it easily gives desired median diameter described later, and particularly, twin screw extruders and multi screw extruders are preferable since they can treat also a modified material of high viscosity, and of them, multi screw extruders are preferable.

The emulsion of the present invention has a volume-based median diameter of a dispersoid of 0.01 to 1 µm, preferably, 0.2 to 0.55 µm, more preferably 0.4 to 0.55 µm.

When the volume-based median diameter is 0.01 µm or more, production is easy, and when 1 µm or less, there is a preferable tendency of improvement in adhesion.

Here, the volume-based median diameter is a particle size at which the value of accumulated particle size distribution based on volume corresponds to 50%.

In the emulsion of the present invention, for example, aqueous emulsions such as a polyurethane aqueous emulsion, ethylene-vinyl acetate copolymer aqueous emulsion and the like, urea resin, thermo-setting resins such as urea resin, melamine resin, phenol resin and the like, fillers such as clay, kaolin, talc, calcium carbonate and the like, preservatives, rust-preventing agents, de-foaming agents, foaming agents, polyacrylic acid, polyether, methylcellulose, carboxymethylcellulose, polyvinyl alcohol, thickening agents such as starch and the like, viscosity regulators, flame retardants, pigments such as titanium oxide and the like, high boiling point solvents such as dimethyl succinate, dimethyl adipate and the like as dibasic acids, plasticizers and the like may be compounded.

Particularly, silicon additives such as polyether-modified polydimethylsiloxane and the like, and acetylene glycol surfactants are preferably added if necessary, from the standpoint of enhancement of wettability when the emulsion of the present invention is coated on a base material of low surface tension such as polypropylene and polyester.

Fillers are recommended to be used for improving flame retardancy and coatability in adhering, and the use amount thereof is usually about 1 to 500 parts by weight, preferably about 5 to 200 parts by weight with respect to 100 parts by weight of solid components of the emulsion.

Examples of the adhesion body to be pasted to the adhering layer obtained from the aqueous emulsion of the present invention include woody materials such as wood, laminated wood, middle density fiber plate (MDF), particle board, orienting strand board and the like; paper materials such as water paper, wrapping paper and the like; cellulose materials such as cotton cloth, hemp cloth, rayon and the like; polyolefins such as polyethylene (polyolefin mainly composed of structural units derived from ethylene, applicable also in the following descriptions), polypropylene (polyolefin mainly composed of structural units derived from propylene, applicable also in the following descriptions), polystyrene and the like; plastic materials such as polycarbonate, acrylonitrile/butadiene/styrene copolymer (ABS resin), (meth)acrylic resin polyester, polyether, polyvinyl chloride, polyurethane and the like; ceramic materials such as glass, pottery and porcelain and the like; metal materials such as iron, stainless, copper, aluminum, and the like.

Such an adhesion body may be a complicated material composed of a plurality of materials. Further, it may also be a kneading molded article composed of inorganic fillers such as talc, silica, activated carbon and the like, and carbon fiber and the like with a plastic material.

When one of the adhesion bodies is a water-absorbing adhesion body composed of a woody material, paper material, cellulose material and the like, the aqueous emulsion of the present invention can be used as it is as an adhesive and pasted to another adhesion body. That is, if an aqueous emulsion is coated on a water-absorbing adhesion body and another adhesion body (may be water-absorbing or non-water-absorbing) is laminated on the layer obtained from the aqueous emulsion, then, water contained in the aqueous emulsion is absorbed in the water-absorbing adhesion body, and the layer obtained from the aqueous emulsion acts as an adhering layer, thus, a laminate having water-absorbing adhesion body/adhering layer/adhesion body can be obtained.

When both the adhesion bodies are non-water-absorbing, it may be advantageous that an aqueous emulsion of the present invention is coated on one surface of one adhesion body, then, dried to form an adhering layer from the aqueous emulsion, then, another adhesion body is pasted, and heated to attain adhesion.

The adhering layer derived from the aqueous emulsion of the present invention manifests excellent adhesion also to an adhesion body composed of a polyolefin such as polypropylene and the like which have been identified as poorly-adhesive conventionally.

Simultaneously, the adhering layer manifests excellent adhesion also to an adhesion body composed of polyurethane.

Though it has been conventionally known that a chlorine-based polyolefin is used as an adhering layer for thus adhering a polyolefin adhesion body and a polyurethane adhesion body, the adhering layer obtained from the aqueous emulsion of the present invention contains no chlorine, and additionally, even a single body of the adhering layer is excellent in adhesion to both the polyolefin adhesion body and the polyurethane adhesion body. Particularly, a laminate in which the polyurethane adhesion body is a foamed polyurethane is suitable for automobile interiors and exteriors.

Here, the polyurethane is a polymer cross-linked by a urethane bond, and usually obtained by the reaction of an alcohol (-OH) and an isocyanate (-NCO). Foamed polyurethanes as shown in examples are polyurethanes foamed by carbon dioxide generated by the reaction of an isocyanate and water used as a cross-linking agent, or by a volatile solvent such as Freon. For interiors of automobiles, semi-hard polyurethanes are used, and for paints, hard polyurethanes are used.

As the adhesion body, particularly, polypropylene, polystyrene, polycarbonate, acrylonitrile/butadiene/styrene copolymer (ABS resin), polyethylene terephthalate, polyvinyl chloride, (meth)acrylic resin, glass, aluminum, polyurethane and the like are preferable, and polypropylene, polyvinyl chloride, glass, aluminum and polyurethane are more preferable.

The aqueous emulsion of the present invention can be used as a paint or primer. In particular, it can be suitably used as a paint or primer to be coated on polypropylene which has been conventionally identified as a poorly-adhering material.

The emulsion of the present invention shows high safety to environments and gives an adhering layer (coat) excellent in adhesion, and the formed adhering layer (coat) is excellent in moldability, heat resistance, solvent resistance, mechanical property and the like, thus, the emulsion can be suitably used as an adhesive, paint, painting primer, or, painting or printing binder.

### EXAMPLES

The present invention will be illustrated further in detail by examples shown below. Parts and % in the examples are by weight unless otherwise stated. The solid content was measured by a method according to JIS K-6828. The viscosity is a value measured by a Brookfield viscometer (manufactured by Toki Sangyo Co., Ltd.) at 25°C.

The limiting viscosity [η] was measured by using a Ubbelohde viscometer using tetralin as a solvent at 135°C.

The molecular weight of an olefin copolymer and an olefin copolymer modified material was obtained under the following conditions using gel permeation chromatograph (GPC) while correcting with a polystyrene (molecular weight: 688 to 400000) standard substance. The molecular weight distribution was evaluated by the ratio (Mw/Mn) of the weight-average molecular weight (hereinafter, referred to as Mw) to the number-average molecular weight (hereinafter, referred to as Mn).
Model: 150-C manufactured by Waters
Column: shodex packed column A-80M
Measuring temperature: 140°C
Measuring solvent: orthodichlorobenzene
Measuring concentration: 1 mg/ml

The content of a vinylcyclohexane unit in the olefin copolymer was measured by the following ¹³C-NMR apparatus.
¹³C-NMR apparatus: DRX 600 manufactured by BRUKER
Measuring solvent: 4:1 (by volume) mixed solvent of orthodichlorobenzene and orthodichlorobenzene-d4
Measuring temperature: 135°C

Regarding the grafting amount of maleic anhydride, 1.0 g of a sample was dissolved in 20 ml of xylene, and the sample solution was dropped into 300 ml of methanol while stirring to cause re-precipitation of the sample which was then recovered, then, the recovered sample was dried in vacuum (80°C, 8 hours), then, a film having a thickness of 100 µm was produced by heat press, and the infrared absorption spectrum of the resulting film was measured, and the maleic acid grafting amount was quantified based on absorption around 1780 cm⁻¹.

### <Production Example of olefin copolymer>

Into a reactor made of SUS purged with argon, 386 parts of vinylcyclohexane (hereinafter, described as VCH in some cases) and 3640 parts of toluene were placed. After heating up to 50°C, 0.6 Mpa of ethylene was charged. 10 parts of a toluene solution of triisobutylaluminum (TIBA) [manufactured by Toso-Aczo Co. Ltd., TIBA concentration: 20%] was charged, subsequently, a solution prepared by dissolving 0.001 part of diethylsilyl(tetramethylcyclopentadienyl) (3-tert-butyl-5-methyl-2-phenoxy)titanium dichloride in 87 parts of dehydrated toluene and a solution prepared by dissolving 0.03 parts of dimethylaniliniumtetrakis(pentafluorophenyl) borate in 122 parts of dehydrated toluene were added, and the mixture was stirred for 2 hours. The resultant reaction liquid was added into about 10000 parts of acetone, and the precipitated white solid was filtrated off. The solid was washed with acetone, then, dried under reduced pressure, resulting in 300 parts of an ethylene-vinylcyclohexane copolymer. The copolymer showed a [η] of 0.48 dl/g, a Mn of 27000, a molecular weight distribution (Mw/Mn) of 2.0, a melting point (Tm) of 62°C and a glass transition point (Tg) of -28°C, and the content of a VCH unit in the copolymer was 12.2%.

### <Production Example of olefin copolymer modified material>

To 100 parts of the resultant ethylene-vinylcyclohexane copolymer was added 0.4 parts of maleic anhydride and 0.04 parts of 1,3-bis(t-butyl peroxy isopropyl)benzene, and sufficiently pre-mixed, then, fed from a feeding port of a twin screw extruder and melt-kneaded to obtain an ethylene-vinylcyclohexane copolymer modified with maleic anhydride (olefin copolymer modified material). Regarding the temperature of a part for performing melt kneading of the extruder, melt kneading was divided into an anterior half stage and a posterior half stage and the anterior half was set at 180°C and the posterior half was set at a raised temperature of 260°C and melt kneading was carried out to obtain an olefin copolymer modified material. The maleic acid grafting amount of the resultant olefin copolymer modified material was 0.2%.

### <Production Example of emulsion>

### (Example 1)

A cell of laboplasto mill micro manufactured by Toyo Seiki Seisaku-sho, Ltd. was set at 95°C, then, 3.12 g of the modified material obtain in <Production Example of olefin copolymer modified material> was enclosed in the cell, and stirred at 300 rpm for 3 minutes. The maximum shear rate in this operation was 1173 sec⁻¹. Thereafter, 0.46 g of an oxyethylene oxypropylene block copolymer (weight-average molecular weight: 15500, Pluronic F108 manufactured by ADEKA Corporation) was added as an emulsifier together with 0.21 g of water, and the mixture was further kneaded at 300 rpm for 3 minutes (shear rate: 1173 sec⁻¹) while keeping the temperature in the cell at 95°C. After kneading, the content was taken out and dispersed by stirring in a vessel containing warm water of about 70°C, to obtain an emulsion having a volume-based median diameter of the dispersoid of 0.43 µm.

### (Comparative Example 1)

An emulsion having a volume-based median diameter of the dispersoid of 2.65 µm was obtained in the same manner as in Example 1 excepting that only 0.64 g of a polyoxyethylene alkyl ether (Emulgen 1135 S-70: manufactured by Kao Corporation) was used as an emulsifier.

### <Adhesion evaluation>

Block polypropylene/ethylene propylene rubber (EPR)/talc = 60/20/20 (weight ratio) were kneaded, then, injection-molded at 220°C to obtain a plate of 15 cm × 5 cm × 3 mm (hereinafter, referred to as complicated PP plate in some cases). Dirt and the like were removed from the complicated PP plate by purified water, then, further washed with acetone, then, the emulsion obtained on the complicated PP plate was coated by casting using a molding frame of 1 mm thickness so that the thickness of the coat after drying was 10 µm. This was dried for 3 days in a temperature-controlled room (23°C, 50% R.H.), and heated for 1 minute in an oven of 120°C for complete drying, to obtain a coat. The resultant coat was incised in the form of grid having a clearance of 5 mm according to JIS-K 5400 (grid peeling tape method test), then, a cellophane tape was pasted in the form of film. Then, 1 to 2 minutes after pasting of the cellophane tape, one end of the tape was clamped and peeled vertically, to evaluate adhesion.

In Example 1, utterly no peeling was observed on intersection points of the incisions and each square, while in Comparative Example 1, the peeled area was 65% or more of the square area.

### (Example 2)

### <Evaluation by laminate>

An emulsion (volume-based median diameter of dispersoid: 0.58 µm, solid content: 43 wt%) prepared in the same manner as in Example 1 was diluted about 5-fold, then, the diluted emulsion was coated using an air spray gun (Wider 60 type manufactured by Iwata Tosoki K.K., nozzle diameter: 1 φ, hold cup No.4) so as to give a thickness of 15 µm, on a complicated PP washed by purified water and air blow. Subsequently, the emulsion was dried for 10 minutes in a ventilating oven set at 80°C, to obtain a two-layered laminate (example) having an adhering layer derived from the complicated PP/aqueous emulsion.

100 parts by weight of a polyether polyol (MHR-2197 manufactured by Mitsui Takeda Chemical K.K.) and isocyanate (LDP-009 manufactured by Mitsui Takeda Chemical K.K.) were mixed for 6 seconds by a homomixer (homomixer model M manufactured by Tokushu Kika Kogyo K.K.) at room temperature, to prepare a polyurethane foaming raw solution.

On a temperature-controlled board kept at 40°C, a frame (340 mm × 340 mm, height: 10 mm) was placed, and the two-layered laminate (example) obtained above was placed in the frame so that the adhering layer faced upward, and the above-described polyurethane foaming raw solution prepared was immediately poured into the frame, and the frame was capped so that the polyurethane did not overflow.

15 minutes after, a three-layered laminate having (complicated PP/adhering layer derived from aqueous emulsion/polyurethane) was taken out from the frame, then, allowed to stand still at room temperature over night and day. The complicated PP (adhesion body) and the foamed urethane (adhesion body) of the three-layered laminate were pulled, to find no peeling of the interface of the adhering layer though the foamed urethane was broken.

### (Comparative Example 2)

On a temperature-controlled board kept at 40°C, a frame (340 mm × 340 mm, height: 10 mm) was placed, a complicated PP was placed in the frame, and the above-described polyurethane foaming raw solution prepared as described above was immediately poured into the frame, and the frame was capped so that the polyurethane did not overflow.

15 minutes after, a two-layered laminate having (complicated PP/polyurethane) was taken out from the frame, then, allowed to stand still at room temperature over night and day. The complicated PP (adhesion body) and the foamed urethane (adhesion body) of the two-layered laminate were pulled, to find peeling of the interface of the complicated PP and the foamed urethane.

### (Example 3 to 11)

Those described in Table 1 as an adhesion body were de-greased with ethanol, then, the aqueous emulsion used in Example 2 was coated by a bar coater, and dried in an oven of 80°C for 40 minutes, to obtain an adhering layer having a thickness of 10 µm derived from the aqueous emulsion. Subsequently, a peeling test was carried out in which a gum tape was pasted to the adhering layer, and the gum tape was peeled at 180° at 50 mm/min. by a precision universal tester Autograph (AG-50kN manufactured by Shimadzu Corp.). The maximum peeling strengths measured are shown in Table 1. In any cases, peeling between the base material and the adhering layer was not observed in peeling the gum tape from the adhering layer.

**Table 1**

| Examples | Base material (name) | Maximum peeling speed (N/cm) |
|---|---|---|
| 3 | Complicated PP(the same as in Example 1) | 12 |
| 4 | polystyrene (Dick styrene, manufactured by DICK Corporation) | 12 |
| 5 | polycarbonate (Stera S-300, TAKIRON Co. Ltd.) | 11 |
| 6 | ABS (Kobe Polysheet ABS, manufactured by Shin-Kobe Electric Machinery CO., Ltd.) | 12 |
| 7 | Polyethylene terephthalate (Takiron PET Plate, TAKIRON Co. Ltd.) | 11 |
| 8 | Hard polyvinyl chloride (manufactured by TAKIRON Co. Ltd.) | 12 |
| 9 | Methacrylic resin (Sumipec GT, manufactured by Sumitomo Chemical Co. Ltd.) | 9 |
| 10 | glass | 11 |
| 11 | Aluminum plate | 12 |

### (Example 1, Examples 12 to 14, Comparative Example 3)

The same procedure as in Example 1 was carried out excepting that the maximum shear rate was set as described in Table 2. The results are summarized together with the result in Example 1. In Example 14, the same procedure as in Example 1 was carried out excepting that <Production Example of olefin copolymer> was used instead of the modified material obtained in <Production Example of olefin copolymer modified material>.

**Table 2**

| | Maximum shear rate (/sec⁻¹) | Median diameter (µm) | adhesi on | Component contained in aqueous emulsion |
|---|---|---|---|---|
| Comparative Example 3 | 190 | 1.65 | × | Modified material |
| Example 12 | 475 | 0.98 | ○ | Modified material |
| Example 1 | 1173 | 0.43 | ⊚ | Modified material |
| Example 13 | 2850 | 0.52 | ⊚ | Modified material |
| Example 14 | 2850 | 0.59 | ○ | Olefin copolymer |

| | | | | |
|---|---|---|---|---|
| ⊚: utterly no peeling on intersecting points of incisions and each square ○: peeled area is less than 15% of square area ×: peeled area is 15% or more of square area (35% in Comparative Example 3) | | | | |

## Claims

1. An emulsion comprising a dispersoid dispersed in water together with an emulsifier, wherein
the dispersoid is an olefin copolymer containing a structural unit derived from ethylene, linear α-olefin, or ethylene and linear α-olefin, and a structural unit derived from the following vinyl compound (I), or an olefin copolymer modified material obtained by further graft-polymerizing unsaturated carboxylic acids to the olefin copolymer,
and the volume-based median diameter of the dispersoid contained in the emulsion is 0.01 to 1 µm:
CH₂=CH-R (I)
(wherein, R in the vinyl compound (I) represents a secondary alkyl group, tertiary alkyl group or alicyclic hydrocarbon group.).

2. The emulsion according to Claim 1, wherein the emulsifier is at least one emulsifier selected from the group consisting of polyoxyethylene polyoxypropylene block copolymers and polyoxyethylene alkyl ethers.

3. The emulsion according to Claim 1, wherein the emulsifier is a water-soluble acrylic resin containing a structural unit derived from an α,β-unsaturated carboxylic acid, vinyl acrylate and (meth)acrylate.

4. The emulsion according to any one of Claims 1 to 3, wherein the vinyl compound (I) is vinylcyclohexane.

5. The emulsion according to any one of Claims 1 to 4, wherein the volume-based median diameter of the dispersoid is 0.2 to 0.6 µm.

6. A method of producing an emulsion wherein an emulsifier and an olefin copolymer containing at least one selected from the group consisting of ethylene and linear α-olefins and a structural unit derived from said vinyl compound (I), or an emulsifier and an olefin copolymer modified material obtained by graft-polymerizing unsaturated carboxylic acids to the olefin copolymer, are kneaded while applying shear stress, before dispersing into water.

7. The production method according to Claim 6, wherein an emulsifier and an olefin copolymer modified material are kneaded while applying shear stress at a shear rate of 450 sec⁻¹ to 30000 sec⁻¹.

8. The production method according to Claim 6 or 7 , wherein kneading is performed while applying shear stress by a twin-screw extruder.

9. A laminate comprising an adhesion body composed of at least one material selected from the group consisting of woody materials, cellulose materials, plastic materials, ceramic materials and metal materials, and an adhering layer derived from the emulsion as described in any one of Claims 1 to 5.

10. The laminate according to Claim 9, wherein the adhesion body is a polyolefin.

11. The laminate according to Claim 9 or 10, wherein the adhesion body is polypropylene.

12. A three-layered laminate having an adhesion body composed of at least one material selected from the group consisting of woody materials, cellulose materials, plastic materials other than polyolefins, ceramic materials and metal materials, an adhering layer obtained from the emulsion as described in any one of Claims 1 to 5, and an adhesion body composed of a polyolefin, in this order.

13. A method of producing a laminate comprising coating the emulsion as described in any one of Claims 1 to 5 on an adhesion body composed of at least one material selected from the group consisting of woody materials, cellulose materials, plastic materials other than polyolefins , ceramic materials and metal materials, and drying the emulsion.
